Europäisches Patentamt

European Patent Office

Office européen des brevets

(11) Publication number: **0 290 172**
**A2**

## EUROPEAN PATENT APPLICATION

(21) Application number: 88303676.6

(22) Date of filing: 22.04.88

(51) Int. Cl.4: **G06F 5/06 , G06F 5/00**

(30) Priority: 30.04.87 US 44867

(43) Date of publication of application:
09.11.88 Bulletin 88/45

(84) Designated Contracting States:
AT BE CH DE ES FR GB GR IT LI LU NL SE

(71) Applicant: **ADVANCED MICRO DEVICES, INC.**
**901 Thompson Place P.O. Box 3453**
**Sunnyvale, CA 94088(US)**

(72) Inventor: **Iyer, Venkatraman**
**2600 Buena Vista Way**
**Berkeley California 94708(US)**
Inventor: **Joshi, Sunil P.**
**4844 Westmont Avenue**
**Campbell California 95008(US)**

(74) Representative: **Sanders, Peter Colin**
**Christopher et al**
**BROOKES & MARTIN High Holborn House**
**52/54 High Holborn**
**London WC1V 6SE(GB)**

(54) Bidirectional fifo with variable byte boundary and data path width change.

(57) There is disclosed herein a FIFO for changing the data path width in transmitting data between two data buses. The FIFO allows the data arriving on the narrower of the two data buses to be assembled in a group of registers with the most significant bit on the extreme right or left of the plurality of registers in which the data is being assembled prior to transmission on the wider of the two data buses. The registers may be optionally loaded from left to right or from right to left. Further, means are disclosed to allows the incoming data to be assembled into a larger word starting at any byte boundary in the word.

# BIDIRECTIONAL FIFO WITH VARIABLE BYTE BOUNDARY AND DATA PATH WIDTH CHANGE

The invention pertains to the field of FIFO's, and, more particularly, to the field of FIFO's which transmit data in either direction between two buses of different sizes and which can change the word boundary.

In communications applications where data is being sent to and received from terminals or other devices connected to a local area network, the situation often arises that the data paths are different sizes and the timing of the transaction requires some buffering. That is, typically the data path coming in from the interface circuitry that handles the encoding of transmit data onto the network media and decoding of data received from the network media is a different size that the data path to and from the local CPU such as the host microprocessor. A typical architecture is to buffer the data to be transmitted in a local memory until such time as the media interface obtains control of the network media and requests the data to be transmitted. Conversely, when data is received from some other unit on the network, the data is stored in the local memory until such time as the local CPU has an opportunity to get the data from the local memory and act upon it. Thus, the local memory provides one level of FIFO buffering.

However, another level of FIFO buffering must be provided in both the transmit and receive directions so that the data path width can be changed. Typically, the data path width from the media interface is 8 bits wide while the data path width to and from the local memory is 32 bits wide. Thus, it is necessary to temporarily store 4 sequentially received 8 bit bytes until 4 bytes have been assembled into a 32 bit word suitable for writing to memory. Conversely, when a 32 bit word is to be transmitted over the network, it is necessary to temporarily store the word while individual 8 bit bytes are sequentially transmitted.

Some known integrated circuits such as the AMD7990 manufactured by Advanced Micro Devices in Sunnyvale, California do provide FIFO buffering and data path width change. The internal architecture of this integrated circuit Ethernet[tm] controller provides for an 8 bit in/8 bit out FIFO followed by an 8 bit to 16 bit data path expander. However, there are certain features which are useful in network and other application which the above-noted machine is not capable of implementing. For example, it is useful to be able to use the same circuitry to transmit and to receive, to be able to use any of the 8 bit bytes as a boundary at which to begin writing the data stream, and to be able to write the 8 bit bytes from left to right or from right to left in assembling the 32 bit words.

The last mentioned feature provides the flexibility to allow the circuitry for data path width change to be used with two very popular microprocessors, i.e., the Intel iAPX8086 and the Motorola 68020, each of which uses a different convention for whether the rightmost bit is the most significant or the least significant bit.

Accordingly, a need has arisen for a flexible FIFO architecture which can change the data path width and incorporate other options to make the device compatible with more systems having different modes of operation.

The apparatus described in the present specification includes a series of 8 bit registers each having a multiplexer controlling access to its input. Each multiplexer has three inputs which are selectively coupled to the data input of the corresponding one of the registers. One of these inputs is the output of the corresponding register. A second input is coupled to the 8 bit bidirectional bus. A third input of each multiplexer is coupled to a selected group of 8 bits from the 32 bit bidirectional bus.

The outputs of the registers are collected together into two 32 bit buses. These buses are selectively coupled to the 32 bit bidirectional bus by a multiplexer. Of course the teachings of the invention contemplate that the width of the input data bus may some other width than 8 bits, and that the output data bus may be some width other than 32 bits.

The select inputs of the input multiplexers are controlled by control circuitry that controls the multiplexers in such a way that each byte that arrives on the 8 bit bidirectional bus is guided into the correct one of the 8 registers. The bytes are loaded sequentially into adjacent registers until a 32 bit word is loaded. Subsequently arriving bytes are loaded sequentially into the next 4 registers in sequence. The sequence of bytes making up a 32 bit word may start at any of the registers as selected by 2 byte select bits supplied from an external source. The order of filling the registers may be reversed such that the registers may be filled from left to right or from right to left. Bus control tri state logic controls the 8 bit and 32 bit bidirectional buses so that data flow in the proper direction may be achieved without contention between receive and transmit circuitry coupled to the same bus.

In the accompanying drawings, by way of example only:-

Figure 1 is a block diagram of a system embodying the invention,

Figure 2 is a block diagram of the data path controller of Figure 1 showing a FIFO which changes the data path width,

Figure 3 is a block diagram of an 8 bit to 32 bit receive only FIFO,

Figure 4 is a block diagram of an 8 bit to 32 bit transmit only FIFO,

Figure 5 is a block diagram of an 8 bit to 32 bit bidirectional FIFO,

Figure 6 is logic diagram for one of the logic blocks of Figure 5.

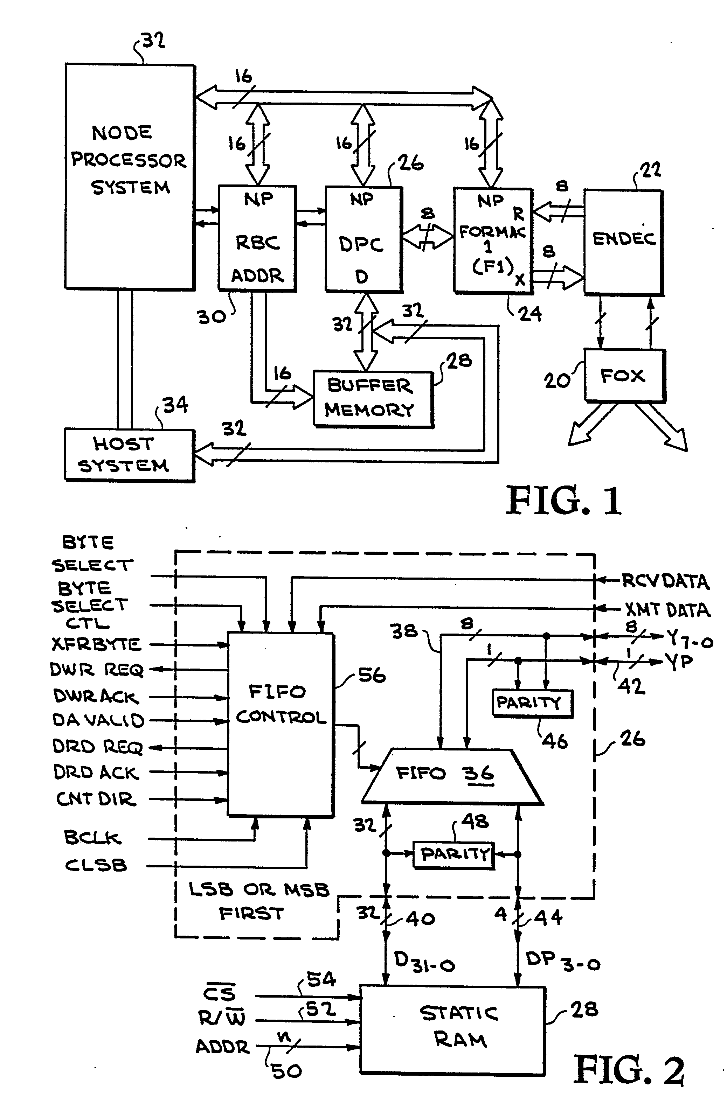

The system of Figure 1 is the interface for a high speed local area network. The network media is generally fiber optic, and the electronic to light drivers and receivers are symbolised by FOX unit 20. The data received is decoded and the data to be transmitted is encoded in the ENDEC unit 22. The FORMAC 24 is a media access controller which implements the protocol or topology specific functions for the particular network. The FORMAC transacts 8 bit data with a data path controller DPC 26 which controls a 32 bit data path to a static RAM buffer memory 28. The address path to the buffer memory 28 is controlled by a RAM buffer controller 30. The node processor 32 is a collection of integrated circuits which includes a microprocessor, and functions to control the RBC, DPC and the FORMAC. The buffer memory temporarily buffers data received from the network bound for a host system 34 and data to be sent out over the network by the host 34 to another unit on the network.

The architecture of the data path controller 26 is given in Figure 2. An 8 bit to 32 bit FIFO is shown at 36. This FIFO receives and transmits 8 bit data on the Y bus 38. The FIFO receives and transmits 32 bit data on the D bus 40. Both buses also carry parity bits which are shown separately on the buses 42 and 44 which are handled by conventional parity checkers 46 and 48. No further mention will be made of these parity checkers or parity bits as those skilled in the art appreciate the details of this circuitry, and because its presence is not critical to the invention.

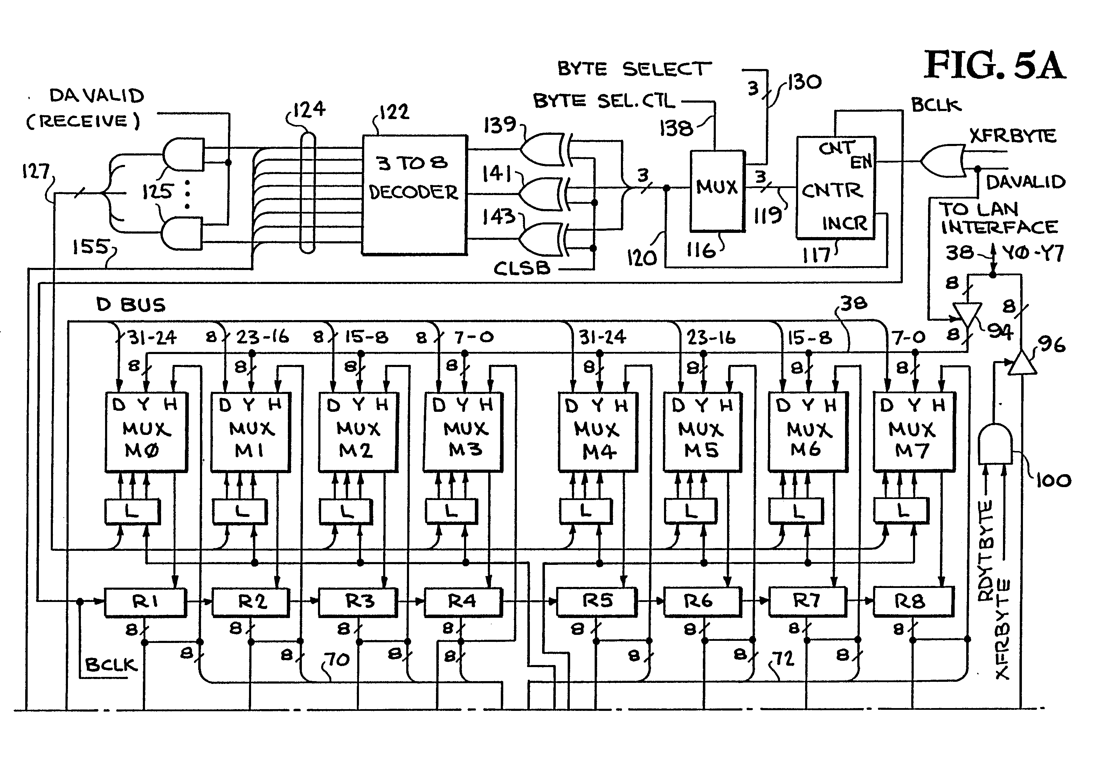

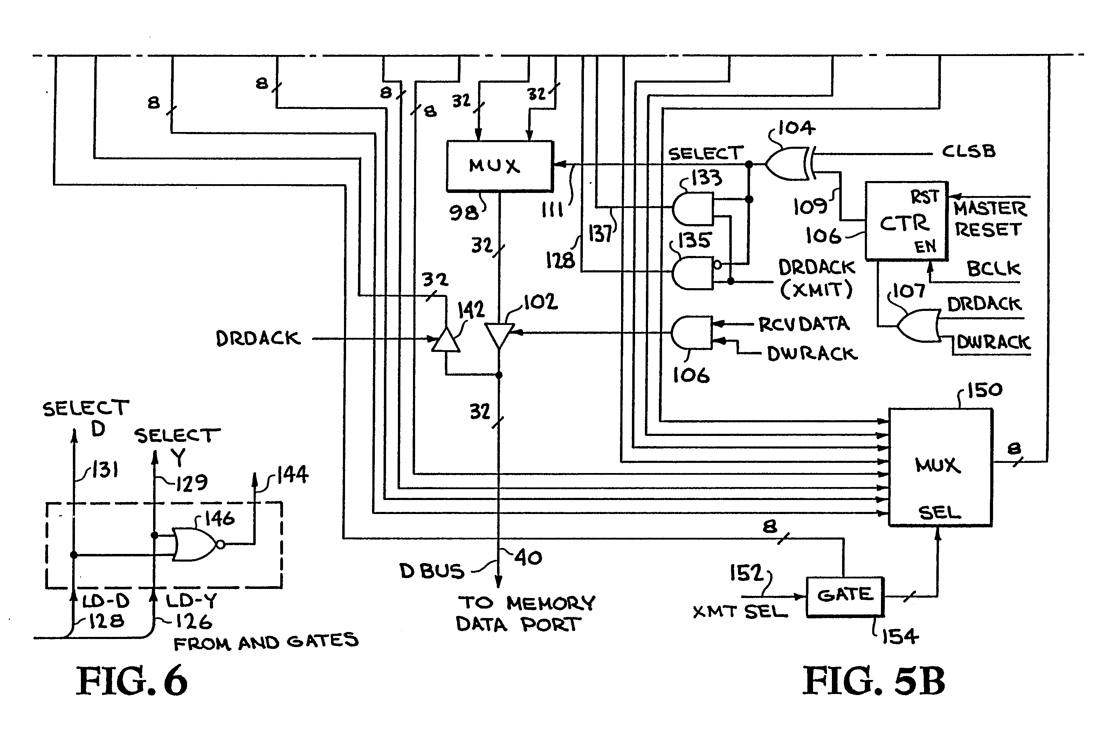

The data on the bus 38 is received from and transmitted to the FORMAC 24, while the data on the bus 40 is transmitted to and received from the buffer memory 28. The address bus 50, read/write control signal 52 and chip select control signal 54 are controlled by the RBC 30. Control of the FIFO is through FIFO control logic 56. The basic purpose of the FIFO control logic 56 is to control the tri state functions of the bus transceivers in the FIFO and to control the various multiplexers and the incrementing and decrementing order as well as the byte boundary where 32 bit words start. The details of this logic will become clear in conjunction with the discussion of Figure 5. The FIFO control also contains logic to determine when one 32 bit word has been assembled from incoming 8 bit bytes and asserts the DWRREQ signal to the RBC indicating that the DPC wishes a write cycle to the memory 28. When this write cycle is granted, the RBC activates the signal DWRACK. The FIFO control circuit 56 also contains logic to determine when the DPC is ready to fill its FIFO 36 with a 32 bit word from memory 28 by a DMA cycle for transmission as 8 bit bytes on the Y bus 38. When the RBC has put the address of the next 32 bit word to be transmitted on the address bus 50 in response to the read request and suitably controlled the control signals on the lines 52 and 54, the RBC activates the DRDACKS signal acknowledging the read request.

The meaning and timing of the other signals coupled to the FIFO control logic 56 will be discussed when the internal details of the FIFO 36 are discussed so that they may be better understood in context of the teachings of the invention.

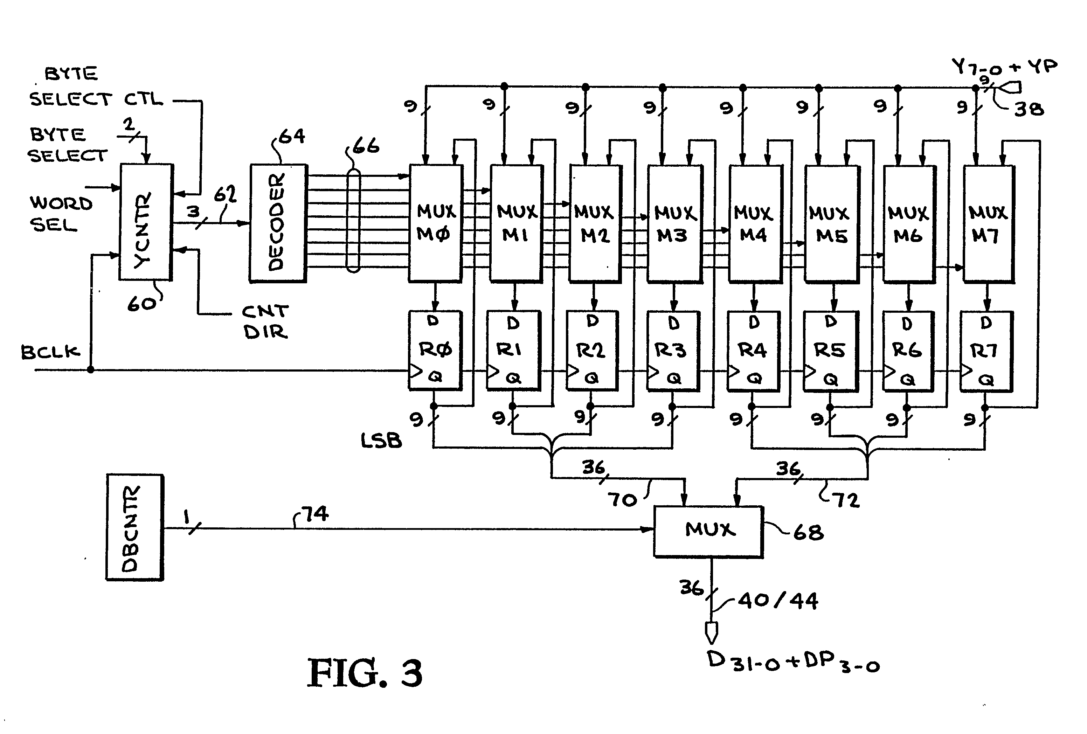

Referring to Figure 3, there is shown a block diagram of a receive only FIFO. Data arrives on the 8 bit Y bus in sequential 8 bit bytes from the network. This data is clocked sequentially into one of the eight 8 bit registers R0 through R7 on each cycle of the byte clock signal BCLK. The particular one of the registers R0 through R7 which receives any particular data byte depends upon the state of the Y counter 60 at any particular moment. The manner in which this is done is via the bus 62 and the decoder 64 to which the bus 62 is coupled. The binary value on the bus 62 is decoded by the decoder 64 which converts the binary value into an activation of one of the output lines on the bus 66. These output lines are coupled to the select lines of a plurality of multiplexers M0 through M7. Each multiplexer has two inputs and one output. One of the inputs is coupled to the Y bus, and the other input is coupled to the output of the register served by the particular multiplexer. The output of each multiplexer is coupled to the D input of one of the registers R0 through R7. Each multiplexer has a select input which receives a control signal which controls which of the two inputs is coupled to the output. In the embodiment of Figure 3, when the select input is active for any particular multiplexer, that multiplexer selects its Y bus input for coupling to the D input of the corresponding register. The signals from the decoder 64 on the bus 66 control which of these 8 multiplexers is selecting its input coupled to the Y bus for coupling to the input of its corresponding register. At any particular time, only one of the lines on the bus 66 is active and only one of the multiplexers will be coupling the Y bus to the data input of the corresponding register. All the other multiplexers couple their inputs coupled to the data outputs of their corresponding data registers back into the data inputs of their corresponding data registers thereby reclocking the contents of each such register back into the register. Thus, as the counter 60 cycles through its various states, each multiplexer in sequence connects the Y bus to the data input of the corresponding register. The result is that each new byte that arrives on the Y bus is clocked into a new register while all the other registers hold their contents steady.

The counter 60 may be initialized to any particular number from 0 to 3 via the 2 bit BYTE SELECT signal. The value on the BYTE SELECT bus is loaded into the Y counter 60 at the beginning of each 4 byte cycle as signaled by the activation of the BYTE SELECT CTL signal. Thereafter, the Y counter counts the cycles of the BCLK signal in either the up or down direction as determined by the logic state of the CNT DIR control. A WORD SEL signal indicates in conjunction with the logic state of the BYTE SELECT signal which 32 bit word is to be addressed by the lines of the bus 66. In other words, the WORD SEL signal and the BYTE SELECT bits together define an initial setting of the state of the lines on the bus 66 at the start of every 4 byte cycle. This allows 32 bit words to be started on variable byte boundaries, i.e., the 32 bit word stored in R0 through R3 may start at any of the registers R0 through R3 and sequentially fill the other registers. Further, counter 60 may count either up or down. This allows words of 32 bits to start at any of the 4 registers R0 through R3 or R4 through R7 and to proceed toward their most significant bits either to the right or the left. This is an important compatibility feature for allowing the network interface and the FIFO in particular to be used with the various popular 32 bit microprocessors as the host. The two most popular 32 bit microprocessors use opposite formats in terms of whether the most significant bits of their 32 bit words are on the left or the right.

The outputs of the 4 registers in each 32-bit word are collected into a 32 bit bus and input to one of the two inputs of the multiplexer 68. This multiplexer has two inputs, each coupled to one group of 4 registers having their outputs collected as one of the 32 bit buses 70 and 72. The 32 bit output of the multiplexer 68 is coupled to the data bus 40. The 4 parity bits are included in Figure 3 so that the output bus is 36 bits in width. The conventional parity generation circuits are not shown. A one bit select signal on the line 74 determines which of these buses 70 or 72 is selected for output.

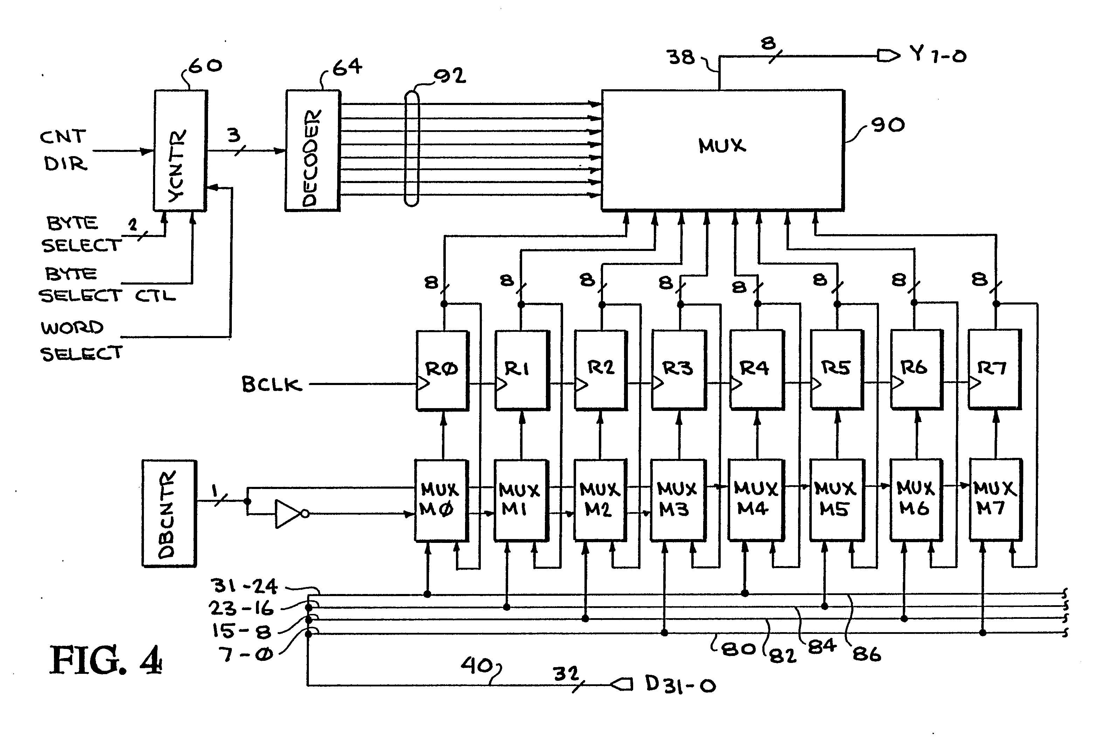

Referring to Figure 4, there is shown a transmit only FIFO according to the teachings of the invention. In this circuit, 32 bits of data enter on the bus 40 from the data port of the buffer memory (not shown). This 32 bit data word is divided into four bytes of 8 bits apiece on four auxiliary buses. Auxiliary bus 80 carries bits 0 through 7, and auxiliary bus 82 carries bits 8 through 15. Auxiliary bus 84 carries bits 16 through 23, and auxiliary bus 86 carries bits 24 through 31. These four auxiliary buses are each coupled to one input of one of 8 multiplexers M0 through M7. These multiplexers have their outputs coupled to the data inputs of 8 data registers R0 through R7 each of which is 8 bits wide. The data outputs of these 8 data registers are coupled to one of the inputs of the corresponding multiplexer to allow the contents of the data register to be held constant at certain times. The data outputs of each data register are also coupled to 8 individual 8 bit inputs of a multiplexer 90.

The purpose of the multiplexer 90 is to select one of the 8 bit buses for output on the 8 bit Y bus 38. The particular one of the 8 bit data outputs from the registers R0 through R7 which are selected by the multiplexer 90 for output is controlled by the select signals on the bus 92. These select signals are controlled by the outputs of a decoder 64 driven by a counter 60. The manner in which the counter 60 and the decoder 64 control the selection of the various multiplexer inputs for output on the Y bus is exactly the same as was described for Figure 3.

Referring to Figure 5, there is shown a diagram of a bidirectional FIFO which changes the data path width from 8 bits to 32 bits and vice versa depending upon the direction of data flow. The 8 bit Y bus 38 is coupled to a bus receiver 94 and a bus driver 96. Each of these circuits has the capacity to enter a high impedance state under the control of control signals wherein the input of each circuit is isolated from its output. This allows the direction of data flow through the FIFO to be changed without adverse loading of the bus by circuitry for driving data in the opposite direction.

To understand the operation of the circuit of Figure 5, data flow from the 8 bit Y bus 38 to the 32 bit D bus 40 will be examined first. Data flow in this direction required that the DAVALID control signal be in such a state that the bus receiver 94 is in the non high impedance state. When the DAVALID signal is in such a state, the DWRACK and XFRBYTE signals are in such a state that the AND gate 100 causes the bus driver 96 to be in the high impedance state thereby preventing the bus driver 96 from adversely loading the Y bus 38. The DAVALID signal is from the media access controller 24 and indicates when valid information is present on the Y bus for input.

The output of the bus receiver 94 is coupled to the Y inputs of 8 multiplexers M0 through M7. The data outputs of these multiplexers are coupled to the data inputs of 8 data registers R1 through R8 each of which is 8 bits wide. The data output of each data register is coupled both back into the hold or H input of the corresponding multiplexer and to a 32 bit word select multiplexer 98 by way of one of two 32 bit buses 70 and 72. Each of these buses collects the 8 bits at the output of each register in one of 4 byte positions in the bus to make up a 32 bit word. For example, the 8 bits from the output of register R5 may occupy bit positions 0 through 7 while the 8 bits from register R6 occupy the bits positions 8 through 15.

The multiplexer 98 selects either bus 70 or bus 72 for coupling to 32 bit output bus 40 by way of bus driver 102. Control over which of the two buses is selected resides in the SELECT signal which is output from the exclusive-or gate 104. This gate has its inputs coupled to one of the outputs of a counter 106 which is a one bit counter which toggles with every cycle of the byte clock signal BCLOCK when enabled. The counter 106 has a reset input which is coupled to receive a MASTER RESET signal. This signal occurs upon power up and when the system is reset, and forces the output of the counter to a known state. This causes a known one of the buses 70 or 72 to be selected. The counter 106 also has an enable input which is coupled to receive the output signal from an OR gate 107 which has its inputs coupled to receive the signals DRDACK and DWRACK. These signals act as acknowledge signals for read and write transactions with the buffer memory. The DWRACK signal is generated in response to a write request signal for a write transaction into the buffer memory, and it lasts for two cycles of the BCLK signal. When DWRACK is active, the counter 106 is enabled for 2 clock cycles and its output line 109 is 0 for one clock cycle and 1 for the other clock cycle during which DWRACK is active. The state of the signal CLSB determines the state of the SELECT signal on line 111 so as to control whether the bus 70 or the bus 72 is selected first. The signal CLSB controls which of the two buses 70 or 72 is selected first for output on the D bus 40 via the exclusive-OR gate 104 and counter 106. The CLSB signal controls whether the least significant byte is stored on the left end or the right end of the register chain R1-R8 and controls the direction in which the registers are filled--i.e., left to right or right to left.

The high impedance state control input of bus driver 102 is controlled by the output of an AND gate 106 which has the signals RCVDATA and DWRACK as inputs. The RCVDATA signal is a signal from the media access controller which indicates to the data path controller that packet reception has begun. This signal bounds every packet. When this signal is high, the DPC prepares itself to receive data on the Y bus. While RCVDATA is high, a high DAVALID signal indicates that the data on the Y bus is valid. The DAVALID signal is a pulse which goes high each time a valid byte is placed on the Y bus. When RCVDATA is low, it indicates that packet reception for that packet is over.

The other input to the AND gate 106 is the signal DWRACK which is a signal from the Ram Buffer Controller (RBC) which is generated in response to a request from the DPC for access to the memory 28 in Figure 1 for a write transaction to empty the FIFO. The request signal for this write transaction and the logic to generate it is not shown, but those skilled in the art will appreciate the design of logic to generate such a request when a 32 bit word of 4 eight bit bytes has been received and is stored in one of the two sets of four registers R1 through R4 or R5 through R8. The DWRACK signal goes high synchronously with the BCLK signal for 2 clock cycles of BCLK when the addresses on the address bus from the RBC to the buffer memory 28 are valid. When DWRACK is high simultaneously with a high RCVDATA signal, AND gate 106 activates the bus driver 102 thereby driving the D bus with whatever 32 bits are selected by the multiplexer 98.

The loading of the FIFO registers during this receive data process is controlled by the logic shown at the top of Figure 5. Loading of the registers R1 through R8 is normally done sequentially from whatever register number is loaded by the node processor into the DPC via the BYTE SELECT BITS bus 130. The manner in which this is done is normally to present either the address of R1 or R8 at one input to a multiplexer 116 via the bus 130 at the start of each new receive cycle for the reception of a 32 bit word (8 bits at a time). The multiplexer 116 is controlled via the BYTE SELECT CTL signals on bus 138 to select the data on the bus 130 for presentation on an output bus 120 at the start of each receive cycle. This data on bus 130 is normally the address of register R1 or register R8 at the start of reception of a new 32 bit word but this byte boundary can be altered by the node processor by placing a different registers address on the bus 130 at the start of each new receive cycle.

The data on the bus 120 is input to an increment counter 132 via bus 120, and is applied to the input of a 3 to 8 decoder 122 through three exclusive-OR gates 139, 141 and 143. The exclusive-OR gates serve to invert all three bits on the bus 120 when the CLSB signal is a logic 1. This has the effect of changing the direction in which the registers are filled to the right to left direction. When CLSB is a logic 0, the registers are filled from left to right. The outputs of the exclusive-OR gates 139, 141 and 143 are decoded by a 3 to 8 decoder 122 which decodes the address and activates one of its output lines on an output bus 124. This bus is coupled to a plurality of AND gates indicated generally at 125 and to a plurality of logic units marked by the boxes with L therein in Figure 5. The purpose of these logic units L is to control the select inputs of the multiplexers M0 through M7. The purpose of the AND gates at 125 is to selectively enable one of the logic units L defined by the data on bus 124 when valid data is present on the Y bus.

The design of each logic box may be as shown in Figure 6 or equivalent and the details of the design are not critical to the invention. There is one output from each of the AND gates at 125, and each AND gate has one of its inputs coupled to one of the outputs from the decoder 122 and another input coupled to receive the DAVALID signal. The combined outputs of the AND gates at 125 are collected in a bus 127. Each of the outputs from one of the AND gates at 125 is coupled to one input of the corresponding one of the logic units L so as to cause the corresponding multiplexer to select its Y input for coupling to the data input of the corresponding register when selected by the decoder 122. Activation of the input 126 in Figure 6 causes the corresponding multiplexer to select its input coupled to the Y bus 38 for coupling to the data input of the corresponding register by activating the select Y signal on line 129. Activation of the input line 128 causes the corresponding multiplexer to select its input coupled to a selected 8 bits from the D bus 40 for coupling to the data inputs of the corresponding register by activating the SELECT D signal on line 131. In the case at hand, reception from the Y bus is being considered. In such a case, when the reception of the first 8 bits of the first 32 bit word begins, whichever of the logic boxes marked L selected by the BYTE SELECT bits on the bus 130 will have its input 126 activated by the decoder 122 and will cause the corresponding multiplexer to selects its Y input. In the absence of any data on the BYTE SELECT BITS control bus 130 from the node processor selecting another register, either the R1 or the R8 register address will be on the bus 130 which will cause R1 or R8 as selected, to be loaded with the first 8 bits from the Y bus. Which register is loaded depends upon whether the host computer is a type where the least significant 8 bits are on the left or on the right of the 32 bit word used by the host processor and whether the first 8 bits received are the 8 least significant or the 8 most significant bits. The node processor will be programmed to properly control the data on the bus 130 to account for the type of host processor being used in any particular application.

The filling of the registers sequentially is accomplished by the counter 117 and the BYTE SELECT CONTROL signal on the bus 138. The three bits on the bus 120 coupled to the inputs of the exclusive-OR gates 139, 141 and 143 are also applied to the increment input of the counter 117. This counter has a count input coupled to receive the byte clock signal, and also has an enable input coupled to the output of an OR gate which has an input coupled to the XFRBYTE signal and an input coupled to the DAVALID signal. The DAVALID signal was explained above, and enables the counter to increment the bits on bus 120 each time valid information is present on the Y bus. The DAVALID signal stays high for the same number of BCLK cycles as there are 8 bit bytes in the incoming packet on the Y bus. The XFRBYTE signal enables the counter to increment the bits on the bus 120 during transmission of data from the registers R1-R8 out the Y bus. The XFRBYTE signal is active only when the RDYTBYT signal is active and can be active for as many clock cycles as there are 8 bit bytes to be placed on the Y bus.

During reception of data from the Y bus, on the first clock cycle of BCLK, the BYTE SELECT CONTROL signal on line 138 is controlled by the node processor to cause selection of the BYTE SELECT bits on the bus 130. During the second clock cycle of BCLK, the node processor controls the BYTE SELECT CONTROL signal so as to cause the multiplexer 116 to select the data on the bus 119 for coupling to bus 120. During the first clock cycle, the data on the bus 120 was the register address encoded in the BYTE SELECT bits on the bus 130. This address was incremented by the counter 117 and presented on the bus 119. Thus when the BYTE SELECT CONTROL signal on line 138 is changed to cause the multiplexer 116 to select the address on the bus 119, that address has already been incremented such that the address on the bus 119 is increased by one from the address originally presented on the bus 130. Similar incrementation occurs on each succeeding byte clock cycle.

Sometimes it is useful to be able to fill the FIFO from a byte boundary other than the 32 bit word boundary. In other words it may be desirable to fill the FIFO from left to right starting at register R2 in a particular circumstance instead of by starting from register R1. To implement this feature, the node processor can place 2 bits on the BYTE SELECT BITS control bus 130 identifying the register in the group of 4 registers to store the 32 bit word at which to start filling from the Y bus. The node processor 32 then also activates a BYTE SELECT CONTROL signal on a line 138 to cause the multiplexer 116 to select its input coupled to bus 130 for application to the bus 120. Thus the decoder 122 causes the proper one of the logic boxes L to cause its corresponding multiplexer to select its Y bus input. On the next BCLK cycle, this byte select data on the bus 120 is incremented by one by the counter 117. If the direction of filling the registers is from right to left as established by the state of the CLSB signal, the exclusive-OR gates 139, 141 and 143 invert the bits on the bus 120 thereby causing each incrementation of the address on the bus 120 to result in a decrementation of the address at the input of the decoder 122. This way a variable byte boundary for 32 bit words may be implemented.

Data transmission from the host processor out over the network requires that the FIFO convert 32 bit data words arriving from the buffer memory 29 on the D bus 40 into a sequence of 8 bit bytes transmitted sequentially on the Y bus 38. The first step in this process is to load the registers R1 through R8 with adjacent 8 bit bytes from the D bus 40. This process occurs when the DRDACK signal becomes active. This signal indicated that there is valid data on the D bus from the buffer memory. The DRDACK signal is generated by the RBC in response to a data read request from the DPC in order to perform a transmission. The signal DRDACK is coupled to the tri state control input of a bus receiver 142 and causes it to couple the D bus 40 to the D inputs of the multiplexers M0 through M7. Each multiplexer M0 through M3 is coupled to a different group of 8 bits on the D bus 40. For example, the D input of the multiplexer M3 is coupled to bits 0 through 7 of the D bus, while the D input of the multiplexer M2 is coupled to bits 8 through 15 of the D bus. This pattern is completed for the rest of the multiplexers M1 and M0 and for the multiplexers M4 through M7 so that each group of four multiplexers M0 through M3 and M4 through M7 is coupled to all the bits on the D bus.

When the transmission from the D bus to the Y bus is to occur, the 32 bit word on the D bus must be broken into four bytes and each byte must be loaded onto a register for holding for transmission. Once four registers have been loaded, their contents may be sequentially transmitted over the Y bus one byte at a time. While the first four bytes are transmitted, the next four bytes may be loaded in the remaining 4 registers.

The loading of the first 4 registers is accomplished simultaneously in the preferred embodiment by placing the 32 bit word on the D bus 40 and activating the signal DRDACK. These 32 bits are simultaneously stroked at the next BCLK cycle into either registers R1 through R4 or R5 through R8 depending upon the state of the CLSB signal.

The way this occurs is through the action of AND gates 133 and 135 and the counter 106 and exclusive-OR gate 104. AND gate 135 has its output coupled to the input line 128 to each of the logic units L for each of the multiplexers M0 through M3. AND gate 133 has its output coupled to the input line 137 for the logic units L corresponding to each of the multiplexers M4 through M7. The input line 133 corresponds to input line 128 for the logic units L corresponding to each of the multiplexers M0 through M3. One of the inputs of each of the AND gates is coupled to the output of the exclusive-OR gate 104, but this input is inverted on the AND gate 135. The other input of the AND gates 133 and 135 is coupled to the DRDACK signal. When the DRDACK signal becomes active, one of the AND gates 133 or 135 has two logic I's at its inputs and causes its output line to become active. Assume that the output of the exclusive-OR gate 104 is in a state so as to cause line 128 to go active. This will result in multiplexers M0 through M3 selecting their D inputs which causes each of the registers R1 through R4 to store 8 bits from the bus 40. Because the DRDACK signal enables the counter 106 for two clock cycles through the OR gate 107, the counter 106 will change the state of its output line 109 one clock cycle later. This causes the output of the exclusive-OR gate 104 to change states which causes the AND gate 133 to activate its output line 137. This causes the registers R5 through R8 to each store 8 bits from whatever 32 bit word then exists on the D bus 40.

It will be noted from Figure 6 that a third control signal on a line 144 is generated by a NOR gate 146. This signal is active whenever neither line 126 or 128 is active for any particular logic unit L, and it causes the associated multiplexer to select its H input which is coupled to the output of the associated register. In Figure 5 these inputs are marked H for hold. The effect when the signal on the line 144 is active for any particular multiplexer and register combination is to cause the contents of the register to be held constant because the contents of the register are strobed back into its data input on each cycle of the BCLK signal.

After all the registers are filled for any particular 32 bit word, transmission of that word may commence, although in some embodiments, transmission may be concurrent with filling of the register. Transmission occurs as follows. All the data outputs of the registers are coupled to the data inputs of a multiplexer 150. The data output of this multiplexer is an 8 bit bus which is coupled to the Y bus by the bus driver 96. The tri state control of this bus driver is controlled by the AND gate 100 and the two control signal inputs RDYTBYT and XFRBYTE. The RDYTBYT signal is asserted by the DPC to the Media Access Controller (MAC) to indicate that the internal FIFO is sufficiently filled and the DPC can guarantee continuous bytes to the MAC. This signal is generated by control logic (not shown) in the DPC, and stays high until the MAC has read all the bytes out of the FIFO by asserting the XFRBYTE signal once per byte. When both of these signals are high, AND gate 100 causes the bus driver 96 to drive the Y bus with whatever byte is currently selected by the multiplexer 150.

The multiplexer 150 has its select inputs controlled by the node processor via the XMT SELECT signal on a bus 152, a gate 154, and the select signals appearing on the bus 127. The node processor can sequentially select which byte to start transmission with and can control the sequence of transmission by way of the BYTE SELECT signal on line 130 and the BYTE SELECT CONTROL signal on line 138. When the XFRBYTE signal is active, it enables the counter 117 to increment the address then on the bus 120. Transmission is started at whatever register is specified by the BYTE SELECT signal on line 130. Thereafter, the BYTE SELECT CONTROL signal switches the multiplexer 116 to couple its input 119 to bus 120 and the counter 117 increments the address once for each byte transmitted. The state of the CLSB signal controls whether the registers are emptied left to right or right to left. The 8 outputs of the decoder 122 are, in addition to being each coupled to one input of one of the AND gates 125, are coupled to a bus 155. EAch of the bits on the bus 155 is coupled through the gate 154 to one of the select inputs of the multiplexer 150. The gate 154 has the same structure as the AND gate network shown at 125. The XMT SEL signal on line 152, when active, couples all 8 lines, on the bus 155 to their corresponding select inputs of the multiplexer 150. The XMT SELECT signal could also be the XFRBYTE signal since the function is equivalent. Each register content is driven onto the Y bus by the bus driver 96 as the line on bus 155 corresponding to that register is activated by the decoder 122.

Although a preferred embodiment of the invention has been described herein, those skilled in the art will appreciate the many modifications that can be made without departing from the scope of the appended claims.

## Claims

1. An apparatus for assisting in the transmission of data between two data buses having different data path widths comprising:

    means for changing the path width for data between said input and said output; and

    means for temporarily storing data while data is being collected for purposes of changing the data path width.

2. The apparatus of claim 1 wherein said means for changing the path width includes means to allow data transmission bidirectionally between said data buses.

3. The apparatus of claim 2 wherein said means for changing the data path width includes a plurality of data registers and means for sequentially loading incoming data from the more narrow of said two data registers into said registers until a sufficient number of bits of incoming data have been received and stored to make up a word on the wider of the two data buses.

4. The apparatus of claim 3 wherein each data register is one byte in width and wherein said means for sequentially loading said data registers allows loading such that said word to be assembled may begin at any byte boundary within the word.

5. The apparatus of claim 3 wherein the incoming data may be written into said data register in either left to right sequential order or right to left sequential order.

6. The apparatus of claim 3 further comprising means for loading incoming data from the wider of the two data buses sequentially in said data registers either from right to left or from left to right.

7. The apparatus of claim 6 wherein said means for loading data from the wider of the two data buses includes means for transmitting the data in smaller packets starting with the data in any one of said plurality of registers.

8. An apparatus for assisting in data transmission between data buses of different widths comprising:

    means for receiving data from either of said data buses at a first data width and for buffering it in a plurality of data registers temporarily and then transmitting it on the other said data bus at a second data path width; and

    means for storing the incoming data in first in first out fashion.

9. An apparatus as defined by claim 8 wherein said means for storing the data in first-in-first-out fashion allows the data to be stored such that the most significant bit is optionally on the left or the right of the assembled word for transmission on the wider of the two data buses.

10. An apparatus as defined in claim 9 wherein said means for storing data stores the incoming data from the more narrow of the two data buses beginning at any byte boundary in the larger data word being assembled for transmission on the wider of the two data buses.

FIG. 1

FIG. 2

FIG. 3

FIG. 4

FIG. 5A

FIG. 6

FIG. 5B